# EUROPÄISCHE PATENTSCHRIFT

(11) **EP 1 358 784 B1**
(45) Veröffentlichungstag und Bekanntmachung des Hinweises auf die Patenterteilung: **24.01.2007**
(21) Anmeldenummer: 03008530.2
(22) Anmeldetag: 12.04.2003
(51) Int. Cl.: A01B 63/111, A01B 63/11

(54) **Landwirtschaftliches Nutzfahrzeug**
Agricultural vehicle
Véhicule agricole

(30) Priorität: 30.04.2002 DE 10219270
(43) Veröffentlichungstag der Anmeldung: 05.11.2003
(73) Patentinhaber: CNH Österreich GmbH, 4300 St. Valentin (AT)
(72) Erfinder: Hrazdera, Oliver, Dipl.-Ing., 4501 Neuhofen an der Krems (AT)
(74) Vertreter: Feldkamp, Rainer

(56) Entgegenhaltungen:
- EP-A- 0 504 913
- WO-A-88/07940
- DE-A- 19 649 273
- US-A- 4 809 785
- US-A- 4 861 069
- US-A- 5 372 204
- PATENT ABSTRACTS OF JAPAN vol. 017, no. 446 (C-1098), 17. August 1993 (1993-08-17) & JP 05 103507 A (ISEKI & CO LTD), 27. April 1993 (1993-04-27)

## Beschreibung

Die Erfindung beschreibt ein landwirtschaftliches Nutzfahrzeug mit Einrichtungen zur Ermittlung der tatsächlichen Fahrgeschwindigkeit über Land, mit Einrichtungen zur Ermittlung der Drehzahl jedes einzelnen und/oder aller Antriebsräder, mit Einrichtungen zur ansteuerbaren Änderung der Getriebedrehzahl, der Motordrehzahl bzw. der Fahrgeschwindigkeit, mit Einrichtungen zur Veränderung des Reifenluftdruckes und Einrichtungen zur Ermittlung der angekoppelten Last und zur Lageveränderung der angekoppelten Last, mit Einrichtungen zur Ermittlung und Anzeige des Schlupfes und mit Einrichtungen zur Erkennung und Anzeige der gegenwärtigen Neigung des Nutzfahrzeuges und ein Verfahren zur Schlupfregelung, insbesondere bei Einsatz auf land- oder forstwirtschaftlichen Böden.

Beim Einsatz von landwirtschaftlichen Nutzfahrzeugen auf land- oder forstwirtschaftlichen Böden, insbesondere bei nassen Wetterlagen, kann durchaus ein Schlupf der Antriebsräder bis zu 25 % auftreten. Das bedeutet, dass bis ca. ¼ des Treibstoffes alleine für den unproduktiven Schlupf verwendet wird. Somit ergibt sich bei einer Schlupfminimierung ein gewaltiges Einsparpotential beim Treibstoffverbrauch.

Es sind Traktoren bekannt, die gegenwärtig Radar verwenden, um die tatsächliche Geschwindigkeit über Grund zu bestimmen. Dabei wird die Differenz der Werte Raddrehzahl und tatsächliche Geschwindigkeit über Grund ermittelt und in geeigneter Form angezeigt. Bei Überschreitung eines gewissen Schlupfwertes wird als einzige schlupfreduzierende Maßnahme das Hubwerk angehoben. Dabei wird das Arbeitsgerät entlastet und damit die angekoppelte Last reduziert, was zur Folge hat, dass damit der Schlupf ebenfalls entsprechend reduziert wird. Außerdem werden gegenwärtig Allrad- und Differentialsperrenmanagements verwendet, deren einziger Sinn darin besteht, am Feld eine Schlupfreduzierung vornehmen zu können. Problematisch bei diesen Systemen ist eine vorhandene Grenzgeschwindigkeit, bei der sich das Management automatisch aus Sicherheitsgründen deaktiviert, damit bei Absenkung des Hubwerkes bzw. Absenkung der Geschwindigkeit das Management nicht unbeabsichtigt aktiviert wird. Alle bisher vorhandenen Managements detektieren nicht den Schlupf, sondern beispielsweise Hubwerkstellungen, Bremsbetätigungen, Lenkbremsbetätigungen und Geschwindigkeiten oder eventuell noch Lenkeinschläge.

Solcherart Einrichtungen zur Schlupfsteuerung und -regelung sind auch in verschiedenen anderen Ausführungen bekannt.

In der DE 36 04 218 C2 ist eine elektrohydraulische Einrichtung zur Regelung eines Hubwerkes an einem landwirtschaftlichen Arbeitsfahrzeug beschrieben, wo für den Anwendungsfall einer hohen Last, hervorgerufen durch einen Pflug, mittels eines Regelkreises die Lage des Hubwerkes verändert wird. Im Regelkreis sind dabei ein Lagesensor, ein Kraftsensor sowie ein Sollwertgeber angeordnet, deren Signale über eine elektrische Einrichtung und eine hydraulische Ventileinrichtung einen das Hubwerk betätigenden hydraulischen Motor steuern. Aus den Lage- und Kraftsignalen und den Signalen eines zusätzlichen Sensors wird ein erster Summenpunkt gebildet, dem auch die Werte der Schlupfsignale aufgeschaltet werden. Daraus wird ein Ausgangssignal gebildet, das in eine Mischvorrichtung eingegeben wird, wobei der Mischvorrichtung über einen weiteren Eingang das Istwertsignal des Lagesensors eingegeben wird und daraus ein Ausgangssignal gebildet wird, das einem zweiten Summenpunkt zugeführt wird, an dem gleichzeitig das Sollwertsignal anliegt, um daraus letztlich die Regelabweichung zu bilden. Auf diese Art wird dann eine Steuerung des Hubwerkes abgeleitet.

Diese auch bei anderen technischen Lösungen eingesetzte Funktion (Pflug bzw. Hubwerk heben) ist aber eher kontraproduktiv, da der Anwender ja eine entsprechende Tiefe pflügen oder in einer bestimmten Schnitthöhe schneiden will.

Dieses Problem versucht eine technische Lösung zu vermeiden, die in der DE 196 49 273 C2 beschrieben ist. Daraus ist ein landwirtschaftliches Nutzfahrzeug mit einem lagegeregelten Hubwerk bekannt, wo zur Lageregelung und zur Steigerung der Arbeitsgeschwindigkeit des Nutzfahrzeuges ein zumindest lastabschaltbares Getriebe angeordnet ist, dessen Untersetzungsverhältnis in Stufen durch eine mit dem Getriebe verbundene Getrieberegelung schlupfoder zugwiderstandsabhängig veränderbar ist.

Der Antriebsmotor besitzt einen Konstantleistungsbereich. Die Drehzahl des Antriebsmotors wird über die mit der Getrieberegelung verbundene Motorregelung in Abhängigkeit vom eingestellten Untersetzungsverhältnis verändert. In einer weiteren Ausbildung der Erfindung ist die Getrieberegelung mit einem Festwertspeicher verbunden, in dem bestimmte günstige Paare von Betriebspunkten für das Getriebe und den Motor abgelegt sind. Vorzugsweise erfolgt die Getrieberegelung dabei elektronisch. Das zugehörige Verfahren beschreibt eine Lageregelung eines Hubwerkes in landwirtschaftlichen Nutzfahrzeugen, bei dem kontinuierlich mittels eines Lagegebers die Arbeitshöhe oder Tiefe erfasst wird, der ermittelte Wert mit einem Sollwert verglichen und aufgrund der Differenz eine Stellgröße generiert wird, die in einem Hubwerksantrieb entgegen der Differenz nachgeführt wird. Des weiteren erfolgt eine Schlupf- oder Zugwiderstandsermittlung und es wird schlupf- oder zugwiderstandsabhängig eine Gangstufe oder ein Untersetzungsverhältnis eines zumindest teilweise lastabschaltbaren Getriebes und eine Motordrehzahl eines Motors ausgewählt. Dabei wird unter ackerbautechnischen Gesichtspunkten ein gleichmäßig aufgebautes Saatbett erzeugt und Bodenverdichtungen werden zuverlässig vermieden. Nachteilig hierbei ist allerdings, dass nur eine stufenweise Regelung möglich ist.

Es ist bekannt, zur Verbesserung der Arbeitsgeschwindigkeit bei modernen Traktoren mit Lageregelung die Traktoren zusätzlich mit einer Schlupfregelung auszurüsten, die in der Regel in Kombination miteinander eingesetzt werden. Dabei ist der maximal zulässige Schlupf voreinstellbar. Kleine Änderungen des Zugwiderstandes werden über ein mehr oder weniger an Schlupf ausgeglichen, ohne dass sie zu Schwankungen der Bearbeitungstiefe führen. Erst bei starken Änderungen des Zugwiderstandes bzw. der Haftungsbedingungen für die Antriebsräder und des dadurch bedingten Überschreitens des eingestellten Schlupfgrenzwertes wird die Lageregelung aktiv und hebt das Hubwerk solange an, bis der Schlupf wieder unter den voreingestellten Grenzwert fällt. Der Nachteil, dass es bei unterschiedlichen Bodenstrukturen zu unerwünschten Schwankungen der Bearbeitungstiefe kommen kann, bleibt aber weiterhin bestehen.

Aufgabe der Erfindung ist es, den Energieverbrauch, insbesondere beim Einsatz auf land- oder forstwirtschaftlichen Böden, zu verringern und die Bodenhaftung für alle unterschiedlichen Einsatzfälle insgesamt zu verbessern, die Bedienung zu vereinfachen und die Fahrsicherheit zu erhöhen.

Diese Aufgabe wird erfindungsgemäß durch die Merkmale des ersten Patentanspruches gelöst. Dabei ist ein landwirtschaftliches Nutzfahrzeug mit Einrichtungen zur Ermittlung der tatsächlichen Fahrgeschwindigkeit über Land, wie z. B. mit einem Radargerät und/oder GPS-Gerät ausgerüstet, womit die tatsächliche Geschwindigkeit über Grund festgestellt wird. Außerdem sind Einrichtungen zur Ermittlung der Drehzahl jedes einzelnen und/oder aller Antriebsräder angeordnet. Die Ermittlung der schlupfbehafteten Geschwindigkeit erfolgt bei Vorliegen eines Antriebes, der die angetriebenen Räder gleichartig antreibt, über mindestens einen Sensor. Ist ein Antrieb vorhanden, der es ermöglicht, die Geschwindigkeit der verschiedenen Antriebsräder unterschiedlich zu gestalten, sind entsprechend mehrere Sensoren angeordnet, mit denen die Radgeschwindigkeit aller bzw. jedes einzelnen Rades ermittelt werden kann. Weiterhin sind Einrichtungen zur ansteuerbaren Änderung der Getriebeübersetzung und/oder der einzelnen Raddrehzahlen, der Motordrehzahl und damit der Fahrgeschwindigkeit angeordnet. Das landwirtschaftliche Nutzfahrzeug besitzt eine Einrichtung, mit der der Luftdruck der Reifen überwacht werden kann, wobei die Reifenauflagefläche der am Fahrzeug angeordneten Räder in Abhängigkeit vom ermittelten Schlupf geregelt wird. Dabei erfolgt eine Veränderung der Reifenauflagefläche der am Fahrzeug angeordneten Räder durch Veränderung des Reifenluftdrucks und die Bodenhaftung wird dadurch erhöht. Gleichfalls ist eine Einrichtungen zur Ermittlung der angekoppelten Last angeordnet. Über spezielle Einrichtungen kann eine Lageveränderung der angekoppelten Last erfolgen oder die angekoppelte Last kann verringert werden. Zudem erkennt das Fahrzeug die vorhandene Last entweder durch Lastdetektoren bzw. Zugkraftsensoren, oder die Last wird aus der Drückung des Motors durch Vergleich der Motordrehzahlvorgabe mit der tatsächlichen Motordrehzahl ermittelt.

Eine weitere Einrichtung dient zur Ermittlung des Schlupfes und ermöglicht über die zentrale Elektronikbox dessen direkte Anzeige über ein Gerät im Sichtbereich des Fahrers. Insgesamt werden die tatsächliche Geschwindigkeit des Fahrzeuges, die Radgeschwindigkeit und die Differenz daraus, nämlich der Schlupf, angezeigt. Gleichfalls ist eine Einrichtung zur Erkennung und Anzeige der gegenwärtigen Neigung des Nutzfahrzeuges vorhanden.

Im landwirtschaftlichen Nutzfahrzeug ist eine zentrale mikrorechnergesteuerte Elektronikbox angeordnet, auf die die Eingangsgrößen aller Einrichtungen und auch die anfallenden Steuersignale geschaltet sind, wobei ein Regler zur Schlupfeinstellung über eine Vorrangschaltung geschaltet und angeordnet ist. Ein weiterer Regler zur Einstellung der minimal zulässigen Fahrzeuggeschwindigkeit ist über die zentrale Elektronikbox so geschaltet und angeordnet, dass entsprechend der Reglereinstellung die Getriebeübersetzung eines CVT Getriebes und/oder gleichzeitig die Motordrehzahl geregelt wird. Dadurch ist eine stufenlose Regelung des Getriebes und auch der Motordrehzahl möglich. Gleichfalls kann mittels einer selektiven Einstellung die Drehzahl jedes einzelnen Rades gesteuert werden.

Erfindungsgemäß ist weiterhin ein Fahrmodenschalter geschaltet und angeordnet, der die Fahrgeschwindigkeit (es sind beliebige Kombinationen Motordrehzahl-Getriebeübersetzung auswählbar) vorrangig in Abhängigkeit vom Schlupf steuert. Durch die erfindungsgemäße Schaltung und Anordnung der Einrichtungen werden beim erfindungsgemäßen Verfahren alle Eingangssignale und Steuersignale der Einrichtungen auf eine zentrale mikrorechnergesteuerte Elektronikbox geschaltet und in dieser ausgewertet. Als Ergebnis der Auswertung werden alle schlupfrelevanten Kenngrößen über Anzeigen dem Fahrer angezeigt. Über Steller ist es möglich, die Grenzwerte, wie maximal zulässiger Schlupf, minimale Fahrgeschwindigkeit und Drehzahl des Motors, voreinzustellen.

Der erfindungsgemäße Fahrmodenschalter ermöglicht die Auswahl mehrerer Fahrmoden in Abhängigkeit von den voreingestellten Grenzwerten in Bezug auf den voreingestellten Schlupf. Dabei werden die entsprechenden Einrichtungen zur Regelung der einzelnen Fahrzeugkomponenten automatisch in Abhängigkeit von einem minimierten voreingestellten Schlupf geregelt. Die Aktivierung des Schlupfmanagements erfolgt mittels eines zusätzlich angeordneten Tasters, dessen Funktion nach jeder Zündung aus/ein erneut aktiviert werden muss. Dabei wird die Funktion des Tasters über geeignete Maßnahmen angezeigt.

Bewegt sich das landwirtschaftliche Nutzfahrzeug auf einem Feld und tritt durch die entsprechende Bodenbeschaffenheit ein entsprechender Schlupf auf, der über dem voreingestellten Wert liegt, wird automatisch die Allrad- und Differentialsperre aktiviert.

Wird dann die Lenkung oder auch die Lenkbremse betätigt, wie z. B. beim Wendevorgang am Feldende, deaktiviert sich die Differentialsperre und eventuell auch die Allradsperre. Nach dem Ende der Betätigung wird diese bei entsprechendem Schlupf wieder automatisch zugeschaltet.

Wird das Feld verlassen, reduziert sich der Schlupf entsprechend der Beschaffenheit der Straßenoberfläche und sowohl Allrad- als auch Differentialsperre werden automatisch ausgeschaltet. Bei rutschiger Oberfläche (z. B. bei stark verschmutzter Straße, bei Schneeglätte oder Glatteis) oder auch bei allen Bremsvorgängen schaltet sich die Allrad- und Differentialsperre automatisch zu. Die Differentialsperre wird natürlich nur zugeschaltet, wenn keine Lenkung oder Lenkbremse betätigt wurde.

Ein Vorteil der erfindungsgemäßen Lösung ist der Wegfall aller Allrad- und Differentialsperrenmanagements der bislang üblichen Bauformen. Die Fahrsicherheit wird erhöht, da sich die Allrad- und Differentialsperre immer dann automatisch aktiviert, sobald das Fahrzeug in kritische Bodenhaftungsverhältnisse kommt. Für den Fahrer ergibt sich aus der erfindungsgemäßen Lösung eine Reduzierung der Schaltfunktionen in der Fahrerkabine. Die Bedienung des landwirtschaftlichen Nutzfahrzeuges wird insgesamt sicherer, einfacher und übersichtlicher. Es erfolgt eine wesentliche Reduzierung des Schlupfes, wodurch eine erhebliche Treibstoffeinsparung eintritt. Durch den neuartigen Fahrmodenschalter, der z. B. als ein Potentiometer ausgebildet sein kann, wird im Zusammenhang mit einem stufenlos regelbaren Getriebe (CVT Getriebe) zunächst der maximal zulässige Schlupf eingestellt und über weitere Einrichtungen der zulässige Fahrgeschwindigkeitsbereich. Die Vorgabe der gewünschten Geschwindigkeit kann mittels Tempomat oder Drivepedal erfolgen.

Sinn dieses Fahrmodes ist es, die Fahrgeschwindigkeit soweit zu verändern, dass ein z. B. mittels Potentiometer eingestellter Schlupf nicht überschritten wird. Steigt nun der Schlupf bei der vorgegebenen Geschwindigkeit über den eingestellten Schlupfwert an, so wird die Getriebeübersetzung und/oder Motordrehzahl des Antriebes stufenlos soweit reduziert (und damit auch die Fahrgeschwindigkeit), bis der Schlupf wieder unter den eingestellten Schlupfwert abgefallen ist. Danach steigt die Getriebeübersetzung wieder an. Sinnvoll ist eine Regelung, die automatisch die Geschwindigkeit an den gewählten Schlupfwert anpasst, auch wenn die Sollgeschwindigkeitsvorgabe über dieser liegt. Des weiteren ist eine minimal zulässige Geschwindigkeit einstellbar. Ein Absinken unter diesen Wert ist nicht möglich, da bei Erreichen der Minimalgeschwindigkeit der Vorrang der Schlupfregelung außer Kraft gesetzt wird bzw. weitere Maßnahmen zur Schlupfreduzierung eingeleitet werden können. Die Veränderung der Motordrehzahl ist ebenfalls eine Regelgröße und beeinflusst die Schlupfregelung, da bei sehr hohem Schlupf vom Fahrzeug beinahe keine Last (es erfolgt kaum noch Vorschub bzw. am Motor wird nur ganz wenig oder keine Drückung ermittelt bzw. es laufen keine oder nur kleine Signalpegel der angeordneten Zugkraftsensoren ein) mehr gemessen wird und es dadurch zu einer eventuell zu großen Absenkung der Motordrehzahl bei mit Motor-Getriebemanagement ausgerüsteten Fahrzeugen kommt. Eine Veränderung der Radgeschwindigkeit kann über alle Achsen, auf Achsenpaaren oder auf jedes Rad einzeln angewendet werden. Durch die Regelung pendelt die Geschwindigkeit zwischen gewünschter Sollvorgabe und Minimalvorgabe entsprechend dem voreingestellten Schlupfwert ohne Eingreifen des Fahrers, wodurch sich der Komfort für die Bedienung weiter erhöht.

Zur Schlupfreduzierung können erfindungsgemäß im bzw. am landwirtschaftlichen Nutzfahrzeug weitere Einrichtungen (Aktuatoren) vorgesehen werden. So ist es sinnvoll, beim Erreichen einer gewissen Schlupfgröße mehr Anpressdruck auf die Antriebsräder zu bekommen. Erfindungsgemäß ist es vorteilhaft, am Nutzfahrzeug Einrichtungen (Aktuatoren) zur Verschiebung des Fahrzeugschwerpunktes anzuordnen oder einzubauen. Ob dabei zuerst die Geschwindigkeit des Fahrzeuges oder die entsprechenden zusätzlichen Einrichtungen, sogenannte weitere Aktuatoren, angesteuert werden, kann vom Fahrer ausgewählt werden. So kann unter anderem durch geeignete Maßnahmen die Stellung der Vorderachse verändert werden bzw. ein Gewicht außerhalb des Nutzfahrzeugschwerpunktes geschoben bzw. der Tankinhalt umgepumpt werden. Diese Aktivitäten sind ebenfalls voreinstellbar und unterliegen dann der automatischen Regelung. Nach der Voreinstellung bedürfen sie keiner wie auch immer gearteten Bedienung bzw. Aufmerksamkeit des Fahrers. In einer weiteren Ausführungsform ist am Nutzfahrzeug mindestens eine Schnittstelle geschaltet und angeordnet, die die Lastaufnahme des bzw. der Anbaugeräte überwacht und über die eine Veränderung, insbesondere eine Reduzierung der Lastaufnahme des/oder der Anbaugeräte, erfolgen kann.

Die Veränderung des Nutzfahrzeugschwerpunktes kann über mechanisch, hydraulisch, pneumatisch oder elektrisch verstellbare und/oder verschiebbare Gewichte in Abhängigkeit vom Schlupf der Antriebsräder erfolgen, wobei diese Veränderungen sinnvollerweise mittels des Schlupfmanagements über die zentrale Elektronikbox steuerbar sind.

In einer anderen Ausführungsform kann der Fahrzeugschwerpunkt bei mehreren an verschiedenen Orten des Fahrzeuges angeordneten und miteinander verbundenen Kraftstofftanks durch Umpumpen des Kraftstoffes während der Fahrt mittels ein oder mehrerer gesteuerter Pumpen verändert werden. Diese Veränderung unterliegt ebenfalls der Abhängigkeit vom Schlupf der Antriebsräder und ist über das Schlupfmanagement steuerbar. Bei einer anderen Lösung bei einem am Fahrzeug angeordnetem Kraftstofftank ist dieser in mehrere Kammern unterteilt. Diese Kammern können unabhängig voneinander mit Kraftstoff durch ein oder mehrere Pumpen während der Fahrt gefüllt werden, wodurch sich der Nutzfahrzeugschwerpunkt in Abhängigkeit vom Schlupf der Antriebsräder beeinflussen lässt.

In einer weiteren Ausgestaltung der Erfindung kann die Reifenauflagefläche der am Fahrzeug angeordneten Räder durch Veränderung des Reifenluftdrucks der Reifen in Abhängigkeit vom voreingestellten maximalen Schlupf geregelt werden. So lässt sich z. B. durch Verringerung des Reifenluftdrucks die Auflagefläche der Reifen erhöhen, was den Schlupf verringert.

Weiterhin kann die Drehzahl der Vorderräder des Fahrzeuges gegenüber der Drehzahl der Hinterräder geändert werden, wenn diese unabhängig von den Hinterrädern antreibbar sind.

In einer weiteren Ausgestaltung der Erfindung können die Räder des landwirtschaftlichen Nutzfahrzeuges durch geeignete spezielle konstruktive Maßnahmen am Fahrzeug während der Fahrt gegenüber der Längs- und/oder Hochachse des landwirtschaftlichen Nutzfahrzeuges schräg gestellt werden. Dadurch erfolgt ebenfalls eine Schlupfreduzierung. Alle diese zusätzlichen Maßnahmen werden, wenn sie am bzw. im landwirtschaftlichen Nutzfahrzeug angeordnet sind und zur Anwendung gebracht werden, über die zentrale Elektronikbox mittels des Schlupfmanagements gesteuert. Dadurch lässt sich über die Antriebsräder die Kraftübertragung verbessern und der Schlupf wird weitgehend minimiert.

Vorteilhaft ist es, wenn ein oder alle Räder entsprechend dem jeweils unterschiedlich aufgetretenen Schlupf mit unterschiedlicher Drehzahl angetrieben und gesteuert werden können. Diese vorteilhafte Lösung ist insbesondere bei schwierigen Bodenverhältnissen oder bei Einsatzzwecken auf Hanglagen für ein optimale energiesparende und sichere Fahrweise des landwirtschaftlichen Nutzfahrzeuges von Vorteil.

Die Erfindung soll nachstehend in einem Ausführungsbeispiel an Hand einer Zeichnung näher erläutert werden.

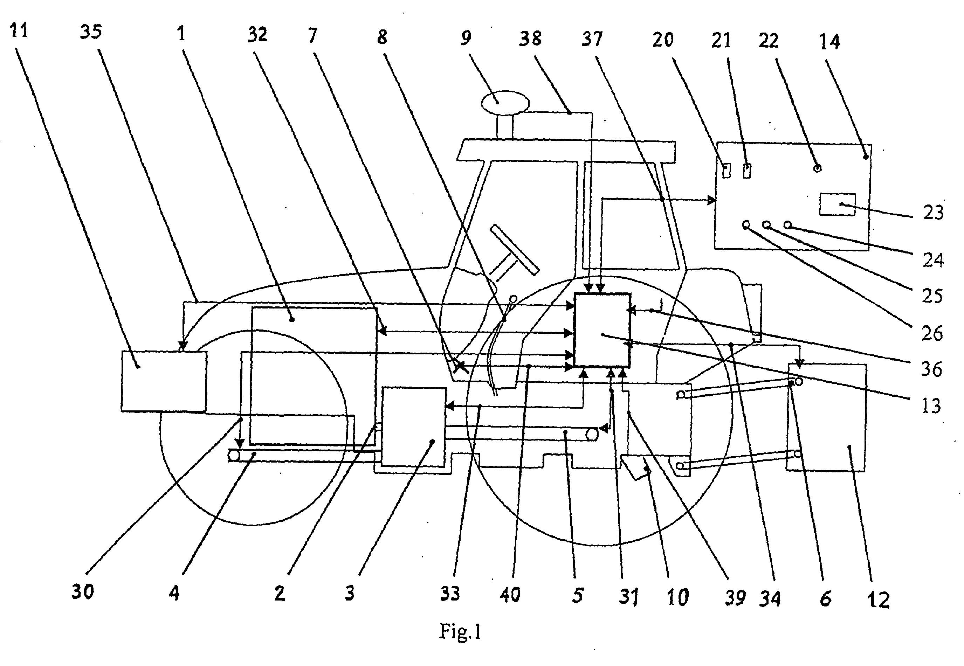

Die Figur 1 zeigt eine schematische Seitenansicht eines landwirtschaftlichen Nutzfahrzeuges in einer Ausführung als Traktor mit den erfindungsgemäßen Bauteilen und ihre Anordnung und ihre Verschaltung untereinander. Der Traktor besitzt als zentralen Antrieb einen Motor 1, der über eine Motorwelle 2 ein CVT-Getriebe 3, ein stufenlos arbeitendes Getriebe, antreibt. Das CVT-Getriebe 3 ist über eine Antriebswelle 4 mit den Vorderrädern gekoppelt. Die Antriebswelle 5 verbindet die Hinterräder mit dem CVT-Getriebe 3. An jedem einzelnen Rad ist mindestens ein Raddrehzahlsensor angeordnet, die jeweils über die Verbindungsleitung 30 zur Ansteuerung und Drehzahlüberwachung der Vorderräder und die Verbindungsleitung 31 zur Ansteuerung und Drehzahlüberwachung der Hinterräder mit der zentralen Elektronikbox 13 verbunden sind (in der Figur 1 sind die Raddrehzahlsensoren nicht dargestellt). In einer besonderen Ausbildungsform sind sowohl an den Hinterädern als auch an den Vorderrädern pro Rad Einrichtungen (Aktuatoren nicht in Figur 1 dargestellt) zur Regelung der Drehzahl jedes einzelnen Rades so angeordnet, dass jedes einzelne Rad jeweils unabhängig von den anderen in gewissen Bereichen in seiner Drehzahl variabel gesteuert werden kann. Am Traktor ist über ein Hubwerk 6 die ankoppelbare Last 12 angeordnet, die in der Regel durch entsprechende landwirtschaftliche Geräte oder Gefährte gebildet wird. Das Gaspedal 7 ist über die Signalleitung 40 mit der zentralen Elektronikbox 13 verbunden. Gleichfalls sind der Motor 1 über den Motorsteuerbus 32, das CVT-Getriebe 3 über den Getriebesteuerbus 33 und die Reifenluftdrucküberwachungseinheit der einzelnen Räder (Aktuator nicht in Figur 1 dargestellt) über die Verbindungsleitung 36 zur Ansteuerung und Überwachung des Reifenluftdrucks mit der zentralen Elektronikbox 13 verbunden. Des weiteren ist das Hubwerk 6 mit Lastsensor und Hubwerklagesensor mit der zentralen Elektronikbox 13 über eine Verbindungsleitung 34 zur Ansteuerung und Überwachung der Lastaufnahme und der Lage des Hubwerkes und damit letztlich der Last verbunden. In einer besonderen Ausbildungsform der Erfindung kann während des Betriebes die Lastaufnahme des angebauten Gerätes verändert werden, so ist es z. B. denkbar, dass bei einem Ackerpflug durch eine Reduzierung der Pflugweite die angekoppelte Last, d. h. die Lastaufnahme, verringert wird.

Auf dem Traktor ist eine GPS-Antenne 9 und unter dem Fahrzeug ein Radargerät 10 angeordnet, deren Signale in die zentralen Elektronikbox 13 mittels der Signalleitungen 38 und 39 eingespeist und ausgewertet werden. Dadurch ist es möglich, zu jeder gewünschten Zeit die genaue Geschwindigkeit über Grund zu ermitteln und anzuzeigen. Des weiteren werden auch die Signale der Lenkung, die Stellung des Schalthebels 8 und die Betätigung der Bremsen über die zentrale Elektronikbox 13 überwacht und ausgewertet (Verbindungsleitungen in Figur 1 nicht dargestellt). Am Traktor ist des weiteren eine erfindungsgemäße Einrichtung (Aktuator) zur Veränderung des Fahrzeugschwerpunktes angeordnet. Im Ausführungsbeispiel sind am Traktor im Frontbereich in ihrer Lage verschiebbare und verstellbare Gewichte 11 angeordnet, mit deren Hilfe sich der Fahrzeugschwerpunkt während der Fahrt in Abhängigkeit vom Schlupf verändern lässt. Die verschiebbaren und verstellbaren Gewichte 11 sind über die Verbindungsleitung 35 zur Ansteuerung und Überwachung des Fahrzeugschwerpunktes mit der zentralen Elektronikbox 13 verbunden und bekommen über diese auch die Steuersignale zu ihrer Lageveränderung.

Die zentrale Elektronikbox 13 wertet alle entsprechend eingehenden Signale zeit- und prioritätsabhängig rechnergesteuert aus und liefert die erforderlichen Daten an eine sich in der Fahrerkabine im Sichtfeld des Fahrers befindende geeignete Bedien- und Anzeigeeinheit 14. Die Bedien- und Anzeigeeinheit 14 ist hierzu mit der zentralen Elektronikbox 13 über einen Informationsbus 37 zur Anzeige der erforderlichen Kenngrößen und dem Rückfluss der einstellbaren Steuerungsdaten verbunden. Über die Bedien- und Anzeigeeinheit 14 werden Steuersignale vom Fahrer eingegeben, die wiederum in der zentralen Elektronikbox 13 ausgewertet werden und als Ergebnis Steuerbefehle für einzelne Einrichtungen (Aktuatoren) liefern, die an verschiedenen Stellen des Traktors angeordnet sind und die eine optimale, energiesparende und sichere Fahrt des Traktors bestimmen und ermöglichen.

Auf der Bedien- und Anzeigeinheit 14 befinden sich ein Modeschalter Schlupf 20, zur Wahl der gewünschten Schlupfsteuerung; ein Gerät zur Einstellung der Steuerungsart 21, die die Vorgabe von Prioritäten bei der Auswahl und Reihenfolge der schlupfreduzierenden Maßnahmen und Betätigung der entsprechenden Einrichtungen (Aktuatoren) ermöglicht; eine Signallampe Schlupf 22, zur Anzeige der eingeschalteten Schlupfsteuerung; ein Anzeigegerät Schlupf 23, zur Anzeige des tatsächlichen Schlupfes; ein Einstellregler Sollgeschwindigkeit 24, zur Auswahl und Einstellung der vom Fahrer gewünschten Sollgeschwindigkeit; ein Einstellregler minimale Geschwindigkeit 25, zur Auswahl und Einstellung der minimal zulässigen Geschwindigkeit des Traktors über Grund und ein Einstellregler Schlupf 26, zur Auswahl und Einstellung eines maximal zulässigen Schlupfes.

Durch das erfindungsgemäße Verfahren zur Schlupfregelung werden beim Betrieb des Traktors alle fahr- und betriebsrelevanten Daten bzw. Signale in der zentralen mikrorechnergesteuerten Elektronikbox 13 gesammelt, bewertet und ausgewertet. In ihr ist ein Festwertspeicher angeordnet, der die fest voreingestellten Grenzwerte und Daten der Fahrmodes enthält. Für die wesentlichen schlupfrelevanten Kenngrößen erfolgt die Anzeige über die Bedien- und Anzeigeeinheit 14 mittels geeigneter Anzeigegeräte. Aus diesen Informationen kann der Fahrer mehrere Fahrmoden mittels des Modeschalters Schlupf 20 in Abhängigkeit von den einstellbaren Grenzwerten zulässiger Schlupf, minimale Geschwindigkeit und Sollgeschwindigkeit wählen. Er kann des weiteren entsprechende Einrichtungen (Aktuatoren) zur Regelung der einzelnen Fahrzeugkomponenten vorrangig in Abhängigkeit von einem minimierten einstellbaren Schlupf auswählen, einstellen und dann mittels der zentralen Elektronikbox 13 automatisch regeln.

So erfolgt z. B. die Einstellung der Motordrehzahl und der Getriebeübersetzung nach der ermittelten tatsächlich aktuellen Last. Sinkt die Last, wird um Treibstoff zu sparen die Motordrehzahl bei gleichzeitig gleich bleibender Fahrzeuggeschwindigkeit abgesenkt.

Kommt der Schlupf während der Fahrt nun in einen Bereich, der den maximal zulässigen Schlupf überschreitet, schalten sich Allrad- und Differentialsperre spätestens jetzt automatisch zu. Außerdem versucht die kombinierte Motor-Getrieberegelung eine Einstellung zu finden, bei der geringere Schlupfwerte auftreten. Ist die Reduzierung des Schlupfes nur unter Reduzierung der Radgeschwindigkeit möglich, so wird diese bis zum voreingestellten minimal zulässigen Geschwindigkeitswert abgesenkt.

Dadurch ist es bei einem landwirtschaftlichen Nutzfahrzeug möglich, hier z. B. bei einem Traktor, in jedem Betriebspunkt (Schlupf und detektierte Last) innerhalb der Regelbereiche Motordrehzahl und Getriebeübersetzung den gesamtwirtschaftlich gesehenen Verbrauchsbestpunkt anzunähern und bezogen auf die optimale Arbeitsleistung den Verbrauch zu reduzieren.

Wird während der Fahrt die Einstellung des Anzeigegerätes Schlupf 23, d. h. der maximal zulässige Schlupf, überschritten und die tatsächliche Geschwindigkeit über Grund unterschreitet die Werte der voreingestellten minimal zulässigen Geschwindigkeit, so werden über die Getriebe-Motorregelung hinaus Reduzierungen der Last am Anbaugerät (z. B. über ISOBUS) vorgenommen. Ist das Fahrzeug mit entsprechenden weiteren vorteilhaften erfindungsgemäßen Einrichtungen (Aktuatoren) ausgerüstet, kann zusätzlich der Schwerpunkt der Gesamtanordnung Fahrzeug-Anbaugerät so verschoben werden, dass zusätzliches Gewicht auf die Abtriebsräder kommt und somit der Schlupf reduziert und das Fahrzeug wieder in den Regelbereich zwischen maximal zulässiger Schlupf und minimal zulässige Geschwindigkeit kommt. Des weiteren können, falls das Fahrzeug über entsprechende Einrichtungen (Aktuatoren) verfügt, der Neigungswinkel der Räder entsprechend verstellt werden. Auch dies dient der Schlupf- und somit auch der Treibstoffverbrauchsreduzierung und der Erhöhung der Fahrsicherheit. Zudem wird durch einen insgesamt ruhigeren Motorlauf das Fahrzeuggeräusch sowohl im Inneren des Traktors als auch für die Umwelt vermindert.

Die erfindungsgemäße Lösung ist auch bei landwirtschaftlichen Nutzfahrzeugen, die mit elektrische Radnabenmotoren angetrieben werden, einsetzbar.

### Liste der verwendeten Bezugszeichen

- 1: Motor
- 2: Motorwelle
- 3: CVT-Getriebe
- 4: Antriebswelle Vorderräder
- 5: Antriebswelle Hinterräder
- 6: Hubwerk
- 7: Gaspedal
- 8: Schalthebel
- 9: GPS-Antenne
- 10: Radargerät
- 11: verschiebbare und verstellbare Gewichte
- 12: angekoppelte Last
- 13: zentrale Elektronikbox
- 14: Bedien- und Anzeigeeinheit
- 20: Modeschalter Schlupf
- 21: Gerät zum Einstellen der Steuerungsart
- 22: Signallampe Schlupf
- 23: Anzeiggerät Schlupf
- 24: Einstellregler Sollgeschwindigkeit
- 25: Einstellregler minimale Geschwindigkeit
- 26: Einstellregler Schlupf
- 30: Verbindungsleitung Ansteuerung und Drehzahlüberwachung Vorderräder
- 31: Verbindungsleitung Ansteuerung und Drehzahlüberwachung Hinterrad
- 32: Motorsteuerbus - Ansteuerung und Überwachung Motordrehzahl
- 33: Getriebesteuerbus - Ansteuerung und Überwachung Getriebeuntersetzung
- 34: Verbindungsleitung Ansteuerung und Überwachung Lastaufnahme
- 35: Verbindungsleitung Ansteuerung und Überwachung zur Veränderung des Fahrzeugschwerpunkts
- 36: Verbindungsleitung Ansteuerung und Überwachung des Reifenluftdruckes
- 37: Informationsbus - Verbindung zur Anzeigeeinheit
- 38: Signalleitung GPS-Antenne
- 39: Signalleitung Radargerät
- 40: Signalleitung Gaspedal

## Patentansprüche

1. Landwirtschaftliches Nutzfahrzeug mit Einrichtungen zur Ermittlung der tatsächlichen Fahrgeschwindigkeit über Land, mit Einrichtungen zur Ermittlung der Drehzahl jedes einzelnen und/oder aller Antriebsräder, mit Einrichtungen zur ansteuerbaren Änderung der Getriebeübersetzung und/oder der einzelnen Raddrehzahlen, der Motordrehzahl bzw. der Fahrgeschwindigkeit, mit Einrichtungen zur Veränderung des Reifenluftdrucks und Einrichtungen zur Ermittlung und Veränderung der angekoppelten Last und zur Schwerpunkt-Lageveränderung der Gesamteinheit, nämlich das Anbaugerät und das Nutzfahrzeug, mit Einrichtungen zur Ermittlung und Anzeige des Schlupfes und mit Einrichtungen zur Erkennung und Anzeige der gegenwärtigen Neigung des Nutzfahrzeuges, wobei
a) eine zentrale mikrorechnergesteuerte Elektronikbox (13) angeordnet ist, auf die die Eingangsgrößen aller Einrichtungen geschaltet sind,
b) ein Einstellregler (26) zur Schlupfeinstellung vorrangig geschaltet und angeordnet ist,
c) und/oder dass ein Einstellregler (25) zur Einstellung einer minimalen Fahrzgeuggeschwindigkeit geschaltet und angeordnet ist,
d) wobei diese Einstellregler (25 und 26) über die zentrale Elekronikbox mit Einrichtungen zur Veränderung der Getriebeübersetzung eines CVT-Getriebes (3) und/oder der Motordrehzahl verbunden sind,
e) und in Abhängigkeit vom eingestellten Schlupf durch die zentrale Elektronikbox (13) weitere Einrichtungen einzeln oder kombiniert ansteuerbar ausgebildet sind,
f) und ein Modenschalter (20) Schlupf geschaltet und angeordnet ist, der die Fahrgeschwindigkeit in Abhängigkeit vom Schlupf vorrangig steuert.

2. Landwirtschaftliches Nutzfahrzeug nach Anspruch 1, **dadurch gekennzeichnet, dass** die die Eingangsgrößen auswertende und Steuersignale erzeugende zentrale mikrorechnergesteuerte Elektronikbox (13) mit einer Bedien- und Anzeigeeinheit (14) verbunden ist, die zur Anzeige der schlupfrelevanten Kenngrößen und zur Auswahl mehrerer Fahrmoden in Abhängigkeit von einstellbaren Grenzwerten ausgebildet ist, wobei die entsprechenden Einrichtungen zur Regelung der einzelnen Fahrzeugkomponenten automatisch vorrangig in Abhängigkeit von einem minimierten einstellbaren Schlupf geregelt werden.

3. Landwirtschaftliches Nutzfahrzeug nach Anspruch 1 oder 2, **dadurch gekennzeichnet, dass** die weiteren Einrichtungen am Nutzfahrzeug angeordnete oder eingebaute Einrichtungen (11) zur Verschiebung des Fahrzeugschwerpunktes einschließen.

4. Landwirtschaftliches Nutzfahrzeug nach Anspruch 3, **dadurch gekennzeichnet, dass** der Fahrzeugschwerpunkt über mechanisch, hydraulisch, pneumatisch oder elektrisch verstellbare und/oder verschiebbare Gewichte (11) in Abhängigkeit vom Schlupf der Antriebsräder steuerbar und veränderbar ist.

5. Landwirtschaftliches Nutzfahrzeug nach Anspruch 3 oder 4, **dadurch gekennzeichnet, dass** bei mehreren an verschiedenen Orten des Fahrzeuges angeordneten miteinander verbundenen Kraftstofftank der Fahrzeugschwerpunkt in Abhängigkeit vom Schlupf der Antriebsräder durch ein oder mehrere Pumpen zum Umpumpen des Kraftstoffes während der Fahrt steuerbar und veränderbar ist.

6. Landwirtschaftliches Nutzfahrzeug nach Anspruch 3 oder 4, **dadurch gekennzeichnet, dass** bei einem am Fahrzeug angeordneten Kraftstofftank dieser in mehrere Kammern unterteilt ist, und dass der Fahrzeugschwerpunkt in Abhängigkeit vom Schlupf der Antriebsräder durch Füllen dieser Kammem unabhängig voneinander mit Kraftstoff mit Hilfe einer oder mehrerer Pumpen während der Fahrt steuerbar und veränderbar ist

7. Landwirtschaftliches Nutzfahrzeug nach einem der Ansprüche 1 - 5, **dadurch gekennzeichnet, dass** die weiteren Einrichtungen mindestens eine Schnittstelle (34) einschließen, die zur Überwachung und Veränderung der Lastaufnahme des oder der Anbaugeräte(s) (12) betreibbar ist.

8. Landwirtschaftliches Nutzfahrzeug nach einem der Ansprüche 1-7, **dadurch gekennzeichnet, dass** die weiteren Einrichtungen Einrichtungen (36) zur Regelung der Reifenauflagefläche der am Fahrzeug angeordneten Räder durch Veränderung des Reifenluftdrucks in Abhängigkeit vom ermittelten Schlupf einschließen.

9. Landwirtschaftliches Nutzfahrzeug nach einem der Ansprüche 1 - 8, **dadurch gekennzeichnet, dass** die weiteren Einrichtungen Einrichtungen zur variablen Änderung der Drehzahl der Vorderräder des Fahrzeuges gegenüber der Drehzahl der Hinterräder einschließen.

10. Landwirtschaftliches Nutzfahrzeug nach einem der Ansprüche 1 - 9, **dadurch gekennzeichnet, dass** die weiteren Einrichtungen Einrichtungen zur Schrägstellung der Räder des Fahrzeuges gegenüber der Längs- bzw. Hochachse des landwirtschaftlichen Nutzfahrzeuges einschließen.

11. Landwirtschaftliches Nutzfahrzeug nach einem der Anspruch 1 - 10, **dadurch gekennzeichnet, dass** die weiteren Einrichtungen Einrichtungen zum Antrieb und zur Steuerung eines oder aller Räder entsprechend dem jeweils unterschiedlich aufgetretenen Schlupf mit unterschiedlicher Drehzahl einschließen.

## Claims

1. An agricultural vehicle with devices for determining the actual travelling speed over the land, with devices for determining the speed of rotation of each individual and/or all of the driving wheels, with devices for controllable variation of the gearbox ratio and/or the individual wheel speeds, the engine speed and the travelling speed, with devices for varying the tyre air pressure and devices for determining and changing the coupled load and for changing the position of the centre of gravity of the entire unit (attached implement and vehicle), with devices for determining and displaying wheel slip and with devices for recognising and displaying the current inclination of the vehicle,
**characterised in that**
a) a central microcomputer-controlled electronic box (13) is arranged, on which the input parameters of all the devices are switched,
b) that a controller (26) for wheel slip adjustment is switched for priority and arranged,
c) and/or that a controller (25) for setting a minimum vehicle travelling speed is switched and arranged,
d) in which these controllers (25 and 26) are connected via the central electronic box with devices for varying the gear ratio of a CVT gearbox (3) and/or the engine speed,
e) and depending upon the set wheel slip further devices are designed to be controllable individually or in combination through the central electronic box (13),
f) and that a mode switch (20) for wheel slip control is connected and arranged, which controls the travelling speed as priority according to the wheel slip.

2. A procedure for wheel slip control on an agricultural vehicle,
**characterised in that**
all the input signals and control signals are evaluated in a central microcomputer-controlled electronic box (13), the wheel slip-relevant parameters are displayed, several driving modes are selectable in accordance with the adjustable limiting values, in which the relevant devices for controlling the individual vehicle components are controlled with priority in accordance with a minimised adjustable wheel slip.

3. An agricultural vehicle in accordance with claim 1,
**characterised in that**
on the vehicle devices (11) for displacing the vehicle's centre of gravity are arranged or built in.

4. An agricultural vehicle in accordance with claim 1,
**characterised in that**
on the vehicle at least one interface is connected and arranged, which monitors the power uptake of the attached implement and which produces a change in the power uptake of the attached implement(s).

5. A procedure for wheel slip control on an agricultural vehicle in accordance with claim 3,
**characterised in that**
the vehicle's centre of gravity is controllable and variable via mechanical, hydraulic, pneumatic or electrically adjustable and/or movable weights (110 according to the wheel slip of the driving wheels.

6. A procedure for wheel slip control on an agricultural vehicle in accordance with claim 3,
**characterised in that**
with fuel tanks arranged at various places on the vehicle and connected with each other, one or more controlled pumps are arranged for circulating the fuel during travel and through this the centre of gravity of the vehicle is controllable and variable according to the wheel slip of the driving wheels.

7. A procedure for wheel slip control on an agricultural vehicle in accordance with claim 3,
**characterised in that**
in the case of a fuel tank arranged on the vehicle this is subdivided, the compartments can be filled independently of each other with fuel through one or more pumps during travelling and thereby the vehicle's centre of gravity is controllable and variable according to the wheel slip of the driving wheels.

8. A procedure for wheel slip control on an agricultural vehicle in accordance with claim 3,
**characterised in that**
for the wheels arranged on the vehicle the area of tyre applied to the ground is regulated according to the measured wheel slip by the varying the tyre air pressure.

9. A procedure for wheel slip control on an agricultural vehicle in accordance with claim 3,
**characterised in that**
the rotational speed of the front wheels of the vehicle is variable relative to the rotational speed of the rear wheels.

10. A procedure for wheel slip control on an agricultural vehicle in accordance with claim 3,
**characterised in that**
the wheels of the vehicle are set obliquely to the longitudinal or vertical axis of the agricultural vehicle.

11. A procedure for wheel slip control on an agricultural vehicle in accordance with claim 3,
**characterised in that**
one or all of the wheels are driven with differing speeds of rotation and controlled according to the wheel slip occurring.

## Revendications

1. Véhicule agricole doté de dispositifs de détermination de la vitesse réelle de déplacement sur le terrain, de dispositifs de détermination de la vitesse de rotation de chaque roue motrice et/ou de toutes les roues motrices, de moyens de variation contrôlable du rapport de la boîte de vitesses et/ou des vitesses de rotation de chaque roue, de la vitesse du moteur et de la vitesse de déplacement, de moyens de variation de la pression des pneus, de dispositifs de détermination et de modification de la charge couplée et de variation de la position du centre du gravité de l'unité entière, c'est-à-dire l'outil et le véhicule, de dispositifs de détermination et d'affichage du patinage et de dispositifs de reconnaissance et d'affichage de l'inclinaison actuelle du véhicule,
sur lequel
a) un boîtier électronique central (13) commandé par un microprocesseur, auquel les paramètres d'entrée de tous les dispositifs sont reliés, est disposé,
b) un régulateur (26) pour le réglage du patinage est relié en priorité et disposé,
c) et/ou un régulateur (25) pour le réglage d'une vitesse de déplacement du véhicule minimale est relié et disposé,
d) lesdites régulateurs (25 et 26) sont reliés via le boîtier électronique central avec des dispositifs de variation du rapport de multiplication d'une boîte de vitesse CVT (3) et/ou de la vitesse du moteur,
e) en fonction du patinage réglé, d'autres dispositifs sont conçus pour pouvoir être commandés de manière individuelle ou combinée, au moyen du boîtier électronique central (13),
f) et un commutateur de mode (20) pour la commande du patinage est relié et monté pour commander la vitesse de déplacement en priorité en fonction du patinage.

2. Véhicule agricole selon la revendication 1, **caractérisé en ce que** le boîtier électronique central (13) commandé par microprocesseur, qui évalue les grandeurs d'entrée et génère les signaux de commande est relié à une unité de commande et d'affichage (14) qui est formée pour l'affichage des grandeurs caractéristiques pertinentes pour le patinage et pour la sélection de plusieurs modes de conduite en fonction de valeurs limites réglables, les dispositifs correspondants pour le réglage des différents éléments de véhicule étant réglés automatiquement de manière prioritaire en fonction d'un patinage minimisé réglable.

3. Véhicule agricole selon les revendications 1 ou 2, **caractérisé en ce que** les autres dispositifs sur le véhicule utilitaire incluent des dispositifs (11) disposés ou intégrés pour le déplacement du centre de gravité du véhicule.

4. Véhicule agricole selon la revendication 3, **caractérisé en ce que** le centre de gravité du véhicule est réglable et modifiable via des poids (11) réglables et/ou déplaçables mécaniquement, hydrauliquement, pneumatiquement ou électriquement en fonction du patinage des roues motrices.

5. Véhicule agricole selon les revendications 3 ou 4, **caractérisé en ce que** pour plusieurs réservoirs de carburant agencé à différents endroits du véhicule et reliés entre eux le centre de gravité du véhicule est réglable ou modifiable pendant la marche en fonction du patinage des roues motrices par une ou plusieurs pompes pour le transfert du carburant pendant la marche.

6. Véhicule agricole selon les revendications 3 ou 4, **caractérisé en ce que** pour un réservoir à essence agencé sur le véhicule, celui-ci est divisé en plusieurs chambres et que le centre de gravité en fonction du patinage des roues motrices est réglable et modifiable en fonction du patinage des roues motrices par le remplissage de ces chambres indépendamment de l'une ou de l'autre au moyen de carburant à l'aide d'une ou de plusieurs pompes pendant la marche.

7. Véhicule agricole selon les revendications 1 à 5, **caractérisé en ce que** les autres dispositifs incluent au moins une interface (34) qui peut être commandée pour la surveillance et la modification de la charge de l' (des) outil(s) monté(s) (12).

8. Véhicule agricole selon l'une quelconque des revendications 1 à 7, **caractérisé en ce que** les autres dispositifs comprennent des dispositifs (36) pour le réglage de la surface d'appui des pneus des roues agencées sur le véhicule en modifiant la pression de gonflage en fonction du patinage.

9. Véhicule agricole selon l'une quelconque des revendications 1 à 8, **caractérisé en ce que** les autres dispositifs comprennent des dispositifs pour la modification variable de la vitesse de rotation des roues avant du véhicule par rapport à la vitesse de rotation des roues arrière.

10. Véhicule agricole selon l'une quelconque des revendications 1 à 9, **caractérisé en ce que** les autres dispositifs comprennent des dispositifs pour le positionnement oblique des roues par rapport à l'axe longitudinal ou vertical de véhicule utilitaire agricole.

11. Véhicule agricole selon l'une quelconque des revendications 1 à 10, **caractérisé en ce que** les autres dispositifs comprennent des dispositifs pour la commande et pour le réglage d'une ou de toutes les roues selon le patinage différent intervenu avec une vitesse de rotation différente.
